# EUROPÄISCHE PATENTSCHRIFT

(11) **EP 3 631 954 B1**
(45) Veröffentlichungstag und Bekanntmachung des Hinweises auf die Patenterteilung: **17.12.2025**
(21) Anmeldenummer: 18728350.2
(22) Anmeldetag: 29.05.2018
(51) Int. Cl.: H02K 11/40

(54) **VORRICHTUNG ZUR REDUZIERUNG VON SCHÄDLICHEN LAGERSPANNUNGEN**
APPARATUS FOR REDUCING DANGEROUS BEARING VOLTAGES
DISPOSITIF POUR RÉDUIRE DES TENSIONS DE PALIER PRÉJUDICIABLES

(30) Priorität: 30.05.2017 DE 102017111826
(43) Veröffentlichungstag der Anmeldung: 08.04.2020
(73) Patentinhaber: ebm-papst Mulfingen GmbH & Co. KG, 74673 Mulfingen (DE)
(72) Erfinder: SCHROTH, Sebastian, 74635 Kupferzell (DE); WECKERT, Marco, 97980 Bad Mergentheim (DE); WALTER, Manuel, 74523 Schw bisch Hall (DE)
(74) Vertreter: Staeger & Sperling Partnerschaftsgesellschaft mbB
(86) Internationale Anmeldenummer: PCT/EP2018/064023
(87) Internationale Veröffentlichungsnummer: WO 2018/219919

(56) Entgegenhaltungen:
- EP-A1- 1 445 850
- DE-B3- 102004 016 738
- DE-U1- 202015 103 902

## Beschreibung

Die vorliegende Erfindung betrifft eine Vorrichtung zur Reduzierung von unerwünschten Lagerspannungen in einer elektrischen Maschine, wie z. B. einem EC-Motor.

Drehzahlveränderbare Motoren werden heute überwiegend von Spannungszwischenkreisumrichtern gespeist. Die Speisung durch den Spannungszwischenkreisumrichter führt jedoch zu Lagerspannungen, was wiederum zu Lagerströmen in den Lagern des Motors führen kann. Ein solcher Stromfluss durch die Lager kann bei elektrischen Maschinen mit Wälz- und Gleitlagern zu Schäden bis hin zum totalen Ausfall führen.

Als Abhilfe wurden in der Vergangenheit hierzu strom isolierte bzw. elektrisch isolierende Lager, z. B. Lager mit einer Keramikisolierung am Außenring oder Hybridlager mit Keramik-Walzkörpern, verwendet. Da diese Lager jedoch sehr teuer sind, eignet sich eine solche Lösung nicht in idealer Weise für die Massenfertigung.

Aus dem Stand der Technik sind weitere Abhilfemaßnahmen bekannt. So lehren die Druckschriften EP 1 445 850 A1 bzw. DE 10 2004 016 738 B3 eine Vorrichtung zum Schutz eines Lagers einer Elektromaschine zu verwenden, die eine Kompensationsanordnung bzw. eine Kompensationseinrichtung zur Erzeugung eines Kompensationsstroms für die Kompensation eines Störstroms durch die Lager vorsieht.

Bei Speisung einer elektrischen Maschine aus einem Pulswechselrichter entsteht eine kapazitiv eingekoppelte Lagerspannung. Durch das geschaltete Pulsmuster des Inverters ergibt sich an dessen Ausgang eine mit der Schaltfrequenz des Inverters springende Gleichtaktspannung (CMV) gegenüber Erde.

Die DE 20 2015 103902 U beschäftigt sich mit der daraus resultierenden Problematik, nämlich dass sich eine Spannung zwischen dem Lagerinnen- und Lageraußenring und der auf einem isolierenden Ölfilm laufenden Kugel des Lagers ausbildet. Kommt es aufgrund unzureichender Isolationsstärke des Ölfilms, bzw. zu hohen Lagerspannungen zu einem Durchschlag der Isolation, so entlädt sich die Ölfilmkapazität sowie weitere parallele parasitäre Kapazitäten des Gesamtaufbaus und es findet ein Ausgleich der Ladungsträger zwischen Lagerinnen- und Lageraußenring statt (electric discharge machining), was zu Lagerschäden führen kann.

Die DE 20 2015 103902 U schlägt hierzu das Einbringen einer Kapazität vor, welche deutlich größer gewählt wird als die parasitär entstehenden Kondensatoren im restlichen Netzwerk. Aufgrund dieser Maßnahme wird der Stator im relevanten Frequenzbereich nahezu mit Massepotential (GND) verbunden. Eine Verbindung zwischen Massepotential und Schutzleiter wird überwiegend durch die im EMV-Filter verbauten Y-Kondensatoren hergestellt. Die Verbindung kann aufgrund der großen Kapazitäten des EMV-Filters für Frequenzbereiche, in denen durch PWM Taktung Lagerspannungen verursacht werden, nahezu als Kurzschluss betrachtet werden. Über die weiteren vorhandenen Kapazitäten kann sich dennoch sowohl am Lageraußenring, als auch am Rotor, bzw. dem damit leitfähig verbundenen Lagerinnenring einer Spannung aufbauen, so dass die Lösung der DE 20 2015 103902 U das der Erfindung zu Grunde liegende Problem nur teilweise beseitigt.

Im Weiteren wird vorausgesetzt, dass die Anbindung des Stators im relevanten Frequenzbereich an Massepotential vorhanden ist. Dann sind für die Spannung am Lageraußenring des statorseitigen Lagers die Verhältnisse aus parasitärer Kapazität zwischen Wicklung und Lageraußenring und Lageraußenring zum Stator dominierend. Das Verhältnis zwischen der parasitären Kapazität zwischen Wicklung und Lageraußenring und der Kapazität zwischen dem Lageraußenring zum Stator liegt dabei typischerweise zwischen 1:1 bis 1:5. Unter der Annahme, dass keine weiteren Kapazitäten am Rotor anliegen, würde ein Potential von ca. 16 - 50% der Zwischenkreisspannung am Lageraußenring entstehen.

Für das Potential des rotorseitigen Lageraußenrings sind die Kapazitäten zwischen der Wicklung zum rotorseitigen Lageraußenring sowie zwischen dem Stator und rotorseitigen Lageraußenring relevant. Die prinzipiellen Verhältnisse sind dabei ähnlich zu denen am statorseitigen Lager.

Die Potentiale am Rotor werden maßgeblich durch das Verhältnis der Kapazitäten zwischen der Wicklung und dem Rotor sowie durch die Kapazitäten des Rotors gegenüber der Erde bzw. dem Schutzleiterpotential und der Kapazität des Rotors gegenüber dem Stator bestimmt. Durch die Kapazitäten der stator- und rotorseitigen Lager sowie weiterer kleiner parasitärer Kapazitäten entsteht eine zusätzliche Verstimmung der genannten Potentiale. Liegen zwischen dem Lageraußenring und dem Lagerinnenring bzw. dem damit leitfähig verbundenen Rotor solche Spannungen an, die über der Isolationsfestigkeit des Schmierfilms zwischen Lauffläche und Kugel liegen, kommt es zum Durchschlag und einem Aufrauhen der Laufflächen.

Der Erfindung liegt deshalb die Aufgabe zugrunde, vorgenannte Probleme zu überwinden und eine Lösung bereit zu stellen, mit welcher die unerwünschten Lagerspannungen und daraus resultierenden Lagerströme wirksam reduziert oder ganz unterbunden werden können.

Diese Aufgabe wird mittels einer Vorrichtung mit den Merkmalen von Anspruch 1 gelöst.

Der Grundgedanke der Erfindung ist darin zu sehen, dass durch Anpassung des Kapazitätsnetzwerks einer elektrischen Maschine oder Motors die Potentiale von Lageraußenring und Lagerinnenring auf denselben Wert angepasst werden, beispielhaft über die beiden Spannungsteiler Wicklung-Lageraußenring-Erdpotential und Wicklung-Lagerinnenring-Erdpotential. wird. Hierzu werden die auftretenden Kapazitäten des Kapazitätsnetzwerks der Maschine bzw. Motors zwischen Statorwicklung und Lager spezifisch abgestimmt.

Erfindungsgemäß wird demnach eine Vorrichtung gemäß des Anspruchs 1 vorgesehen. Diese Vorrichtung dient zur Reduzierung von schädlichen Lagerspannungen in einer elektrischen Maschine mit einem Rotor und mit einem Stator, wobei zwischen Rotor und Stator ein rotorseitiger und statorseitiger Lageraußenring und je ein Lagerinnenring vorgesehen ist, weiter umfassend eine Anschlusselektronik zum Anschluss des Motors, wobei eine Kompensationsanordnung vorgesehen ist, um das Potential der Lagerspannung an den Lageraußenringen und dem jeweils korrespondierenden Lagerinnenring auf einen identischen Wert anzugleichen. Ferner umfasst die genannte Kompensationsanordnung eine Impedanz, bestehend aus einer ersten (abgestimmten) Impedanz zwischen dem Stator und dem rotorseitigen Lageraußenring und einer zweiten (abgestimmten) Impedanz zwischen dem Stator und dem statorseitgen Lageraußenring.

Für eine gut funktionierende Kompensation der Lagerspannung besitzen die Potentiale von Rotor sowie der Lageraußenringe daher denselben Wert. Dies wird z. B. dadurch erreicht, dass eine Gleichtaktspannung mit höherem oder niedrigerem Potential kapazitiv auf den Lageraußenring eingekoppelt wird.

Zur Umsetzung des erfindungsgemäßen Gedankens bieten sich die folgenden näher beschriebenen Lösungen an.

In einer bevorzugten Ausführungsform der Erfindung ist die Kompensation der Lagerspannung bei gemasstem Stator über eine Impedanz vorgesehen. Hierbei ist weiter vorgesehen, dass die Kompensationsanordnung eine Ankopplung des Stators an das Massebezugspotential der Anschlusselektronik über eine definierte Kapazität umfasst.

Bei der vorliegenden Erfindung erfolgt, anders als im Stand der Technik, kein Abgleich der Impedanzen, sondern ein gezielter Abgleich der Potentiale gegenüber Erde, bzw. der Spannungen über dem Lager. Eine Kombination aus einer Ankopplung des Stators an das Massebezugspotential der Kommutierungselektronik führt nicht nur zu einer Reduzierung der Lagerspannung, sondern auch zu einer Verbesserung der EMV-Eigenschaften durch ein konstantes nicht geerdetes Statorpotential, indem durch Common Mode verursachte Ableitströme nicht über den Erdleiter, sondern direkt in die Elektronik zurück fließen.

Mittels einer Kapazität wird das Statorpaket auf ein niedrigeres Potential gegenüber Erde gezogen im Vergleich zum Rotorpotential. Dadurch herrscht am Lageraußenring auf Grund des Spannungsteilers aus den Kapazitäten zwischen Wicklung und Lageraußenring und zwischen Lageraußenring und Stator ein höheres Potential als am Stator und Rotor. Dies ist Voraussetzung, dass durch Einbringen einer zusätzlichen Impedanz das Spannungsteilungsmaß des Spanungsteilers der Kapazitäten zwischen Wicklung, Lageraußenring und Stator verringert wird und das Potential am Lageraußenring absinkt bis die am Lager verbleibende Spannung unkritische Werte erreicht.

Des Weiteren ist es möglich beispielsweise durch Eingriff in die geometrischen Abmessungen den Spannungsteiler aus der Kapazität zwischen Wicklung und Lageraußenring und der Kapazität zwischen Lageraußenring und Stator zu variieren, beispielsweise durch Vergrößern des Abstands der Wicklung vom Lager.Ebenfalls wäre es möglich eine Erhöhung der Kapazität zwischen Stator und Lageraußenring beispielsweise durch Verringerung des Abstands vom Lageraußenring zum Stator zu erreichen.

Ein Vorteil der Erfindung gegenüber bekannten Lösungen liegt darin, dass bei einer Veränderung der Rotoranbauten und der damit verbundenen Potentialänderung zwischen Rotor und Schutzerde eine Kompensation durch Änderung der Kapazität zum Massebezugspotential erreicht werden kann, wodurch aber gerade keine Änderung der geometrischen Abmessungen im Motor notwendig sind.

Des Weiteren kann durch Einbau einer Impedanz vom Lageraußenring zum Stator der Potentialausgleich erreicht werden, ohne dass nennenswerte geometrische Veränderungen vorgenommen werden müssen.

Darüber hinaus kann die Anbindung insbesondere bei Außenläufermotoren sehr einfach erfolgen, da der Lageraußenring und der Stator feststehen und nahe beieinander liegen. Insbesondere der Lagersitz des Motors, welcher Hohlstellen aufweist, kann genutzt werden um z. B. mittels einer Klammer oder eines Clips, welcher die gewünschte Impedanz aufweist, eine Verbindung zwischen dem Lageraußenring und den Statorblechen herzustellen.

Weiter bevorzugt ist es, wenn wenigstens eine der beiden Impedanzen im Lagersitz oder einem Hohlraum in einer elektrischen Verbindungsanordnung zwischen dem Stator und dem Lageraußenring angeordnet ist.

In einer weiteren Lösungsmöglichkeit nach der Idee der vorliegenden Erfindung ist vorgesehen, dass die Kompensationsanordnung zur Veränderung der Lagerspannung wenigstens eine Lagerschirmung zwischen der Motorwicklung und dem rotorseitigen und/oder statorseitigen Lageraußenring und dem Stator vorsieht.

Es ist dabei von Vorteil, wenn die Lagerschirmung als Schirmring in eine Lagertasche um den Lageraußenring eingesteckt ist.

Die Vorteile bestehen darin, dass der Schirmring in der Produktion als Einlegeteil gefertigt werden kann und keine direkte elektrische Verbindungen an den Lageraussenring erfordert. Somit muss kein elektrischer Kontakt zwischen dem Lageraußenring und dem Schirmring bestehen, welcher im Lauf der Zeit korrodieren oder durch mechanischen Anpressdruck das Lager beeinflussen kann. Ferner werden Verspannungen des Lagers vermieden und ist kein Eingriff in das mechanische System des Lagersitzes notwendig.

Der Schirmring wird in das elektrische Feld zwischen der Wicklung und dem Lageraußenring eingebracht und optional über eine Kapazität an den Stator angebunden.

Besonders vorteilhaft ist es, wenn für den rotorseitigen Lageraußenring eine erste Lagerschirmung vorgesehen ist und für den statorseitigen Lageraußenring eine zweite (davon getrennte) Lagerschirmung vorgesehen ist, die sich von der ersten Lagerschirmung zumindest betreffend der Teilerverhältnisse unterscheidet.

In einer weiteren Lösungsmöglichkeit nach der Idee der vorliegenden Erfindung ist vorgesehen, dass die Kompensationsanordnung an zueinander isolierten Statorblechen realisiert wird. Bei neuartigen Verfahren wie beispielsweise einer Backlack-Beschichtung der Statorbleche oder durch Isolationsmaterial wird der elektrische Kontakt zwischen den Blechen gezielt getrennt. Diese Isolation kann man gezielt nutzen, um die Lagerspannung zu reduzieren.

Betrachtet man hierzu das Lagerspannungsersatzschaltbild, so verändert sich durch die Isolation zwischen den Statorblechen die Kapazität zwischen dem Stator und den Lageraußenringen nicht als einzelne Kapazität, sondern als eine Kombination aus einer Vielzahl von Kapazitäten. Liegt nun eine Gleichtaktspannung an der Wicklung an, so entsteht an jedem der Bleche aufgrund der kapazitiven Kopplung zur Wicklung oder über die einzelnen Bleche hinweg ein Potential gegenüber Erde (PE). Die Potentiale der einzelnen Bleche sind dabei nicht zwingendermaßen identisch. Aufgrund der großen Kapazitäten zwischen den Statorblechen kann aber davon ausgegangen werden, dass das Potential jeweils unmittelbar benachbarter Bleche nur geringe Differenzen aufweist.

In einer vorteilhaften Ausgestaltung der Erfindung ist demnach vorgesehen, dass die Ankopplung des Stators an das Massebezugspotential über wenigstens eine Anzahl an Statorblechen des Stators erfolgt, die gegenüber den weiteren Statorblechen des Stators isoliert sind, um das Potential des Lageraußenrings an das Potential des Rotors anzugleichen.

Somit wird das Potential des Lageraußenrings maßgeblich nicht mehr nur durch ein einzelnes Blech, sondern durch eine Gewichtung der Potentiale der einzelnen Bleche erhalten und gemäß ihrer kapazitiven Kopplung auf den Lageraußenring gewichtet d.h. durch gezielte Massung einzelner Statorbleche wird das Potential des Lageraußenrings an das Potential des Rotors angepasst. Je mehr Bleche in der Nähe eines Lageraußenrings mit der Massung verbunden sind, desto weiter sinkt das Potential gegenüber Erde ab. Diejenigen nicht an das Massebezugspotential angebundenen Bleche erhöhen hingegen das Potential der Lageraußenringe gegenüber dem Erdpotential.

Ein entscheidender Vorteil bei dieser Lösung ist es, dass der Spannungsteiler der Kapazitäten zwischen Wicklung, Lageraußenring und Stator jeweils für das statorsseitige und für das rotorseitige Lager separat abgeglichen werden kann und so die Lagerspannung auf minimale Werte anpassbar ist.

Ferner kann durch gezielte Isolation zwischen den Lagen mehrerer elektrisch miteinander verbundener Bleche eine Blechgruppe erstellt werden. Innerhalb der Blechgruppe ist das Potential identisch. Über die Anzahl der zu einer Blechgruppe gehörenden Bleche, sowie die Auswahl der gemassten Blechgruppen kann das gewünschte Potential eingestellt werden.

Alternativ zu einer Anbindung an das Massenbezugspotential kann auch eine Erdung erfolgen. Das erläuterte Prinzip ist dabei analog. Die Anbindung der einzelnen Bleche an das Erdpotential kann beispielsweise mittels eines Stifts erfolgen, welcher durch die Blechpaktete geführt wird. Sollen hierbei einzelne Bleche oder Blechpakete nicht angebunden werden, so ist an der Durchführungsstelle des Stifts eine Aussparung oder Isolation vorzusehen, so dass der Stift keinen leitfähigen Kontakt zu den betroffenen Blechen besitzt.

Es ist daher mit Vorteil vorgesehen, dass die an das Massebezugspotential oder an das Erdpotential gekoppelten Statorbleche miteinander über einen die Statorbleche durchdringenden, leitfähigen Stift elektrisch verbunden ist.

In einer weiteren Lösungsmöglichkeit nach der Idee der vorliegenden Erfindung ist vorgesehen, dass die Kompensationsanordnung über eine Rotorerdung und Lagererdung in Kombination mit einer Massenanbindung des Stators erfolgt, was insbesondere bei Applikationen in leitfähigen Flüssigkeiten von Vorteil ist. Erfindungsgemäß wird hierzu eine Vorrichtung vorgeschlagen bei der der Rotor mittels einer leitfähigen Flüssigkeit mit dem Erdpotential (PE) in elektrischer Verbindung steht und der rotorseitige und statorseitige Lageraußenring über eine am Stator entlang oder durch diesen hindurchgeführte elektrische Verbindung miteinander verbunden ist.

Besonders vorteilhaft ist es, wenn der statorseitige Lageraußenring ferner mit dem Erdpotential (PE) verbunden ist.

Ein weiterer Aspekt der vorliegenden Erfindung betrifft einen Elektromotor, vorzugsweise einen EC-Motor, ausgebildet mit einer wie zuvor beschriebenen Vorrichtung.

Ein weiterer Aspekt der vorliegenden Erfindung betrifft ferner ein Verfahren gemäß des Anspruchs 14. Dieses Verfahren dient zum Anpassen einer beschriebenen Vorrichtung an eine veränderte Applikationsbedingung, bei der das Potential des Rotors gegenüber dem Massebezugspotential verringert wird, indem das Potential am Lageraußenring abhängig vom Potential des Rotors auf einen jeweils entsprechend niedrigeren Wert eingestellt wird.

Um demnach eine möglichst breite Kompensation der Lagerspannung für viele Applikationen zu erreichen ist es zielführend, den Lageraußenring auf ein niedrigeres Potential einzustellen, als das Potential des Rotors. Wird dann in der Applikation das Rotorpotential gegenüber Erde verringert, beispielsweise durch zusätzliche leitfähige Gegenstände in der Nähe des Rotors, so wird zunächst die Spannung über dem Lager kleiner. Erst bei sehr großen kapazitiven Kopplungen des Rotors zur Erde steigt die Lagerspannung dann auf kritische Werte an.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine Schnittansicht durch einen Motor gemäß einer ersten Ausführungsform der Erfindung,
- Fig. 2: ein Ersatzschaltbild des Kapazitätsnetzwerkes für die Ausführung nach Figur 1,
- Fig. 3: eine Darstellung eines zweiten Ausführungsbeispiels der Erfindung mit einer Lagerschirmung;
- Fig. 4: ein Ersatzschaltbild des Kapazitätsnetzwerkes für die Ausführungsform gemäß Figur 3;
- Fig. 5: ein Detail des Ersatzschaltbilds des Kapazitätsnetzwerkes für die zweite Ausführungsform gemäß Figur 3;
- Fig. 6: ein Ersatzschaltbild des Kapazitätsnetzwerkes für eine weitere Ausführungsform gemäß der vorliegenden Erfindung;
- Fig. 7: ein Detail des Ersatzschaltbilds des Kapazitätsnetzwerkes für die Ausführungsform gemäß Figur 6 und
- Fig. 8: eine Darstellung eines weiteren Ausführungsbeispiels der Erfindung.

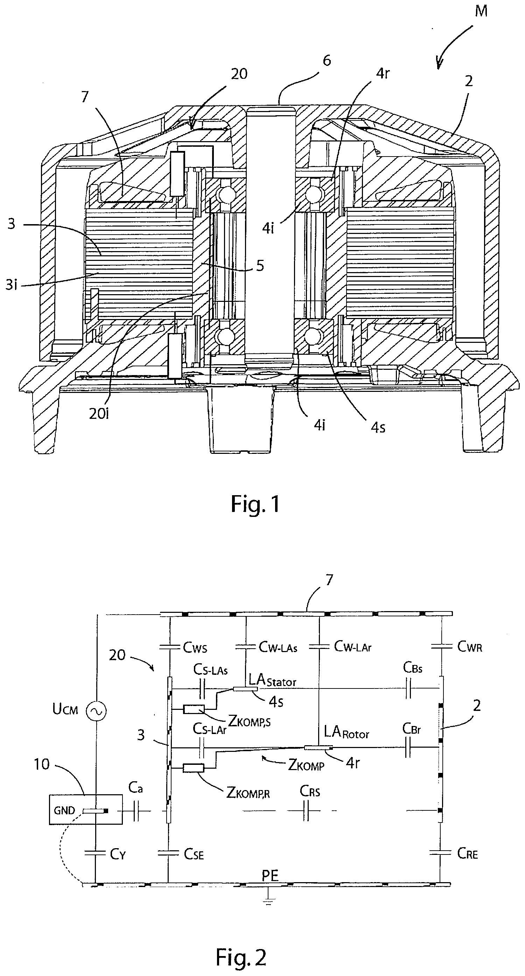

Die Erfindung wir nachfolgend anhand bevorzugter Ausführungsbeispiele mit Bezug auf die Figuren 1 bis 8 näher beschrieben, wobei gleiche Bezugszeichen auf gleiche funktionale und/oder strukturelle Merkmale hinweisen.

In der Figur 1 ist eine Schnittansicht durch einen Elektromotor M mit einer Vorrichtung zur Reduzierung von schädlichen Lagerspannungen an den Lagern 4r, 4s, 4i gemäß einer ersten Ausführungsform der Erfindung dargestellt.

Der Motor M besitzt einen Rotor 2 und einen Stator 3 gebildet aus Statorblechen 3i. Zwischen dem Rotor 2 und dem Stator 3 ist jeweils ein rotorseitiger und statorseitiger Lageraußenring 4r, 4s und je ein Lagerinnenring 4i vorgesehen. Weiter dargestellt sind die Welle 6 und die Wicklung 7 des Motors M. Hierbei sind die Lager am Außenring 4r, 4s gegenüber den anderen metallischen Teilen über die Isolierung 5 elektrisch isoliert.

Ferner ist eine Kompensationsanordnung 20 vorgesehen, um das Potential der Lagerspannung an den Lageraußenringen 4r, 4s und dem jeweils korrespondierenden Lagerinnenring 4i auf einen identischen Wert anzugleichen. Die Kompensationsanordnung 20 umfasst eine Ankopplung des Stators 3 an das Massebezugspotential GND der Anschlusselektronik über eine definierte Kapazität Cₐ, wie dies im Ersatzschaltbild der Figur 2 ersichtlich ist. Das Ersatzschaltbild repräsentiert das Kapazitätsnetzwerk für die Ausführung nach Figur 1 mit zwei aktiv eingebrachten Impedanzen Z_{KOMP,R}, Z_{KOMP,S} und die systembedingten Kapazitäten C_{ws}, C_{W-LAs}, C_{W-LAr}, C_{WR}, C_{BS}, C_{BR}, C_{RS}, C_{RE}, C_{SE}, C_{Y}, C_{S-LAS}, C_{S-LAr}., auf die jedoch nicht näher eingegangen wird. Ferner ist das Potential PE der Schutzerde in dem Netzwerk dargestellt.

Die Kompensationsanordnung 20 ist mittels einer Impedanz Z_{KOMP} realisiert, bestehend aus einer ersten Impedanz Z_{KOMP,R} zwischen dem Stator 3 und dem rotorseitigen Lageraußenring 4r und einer zweiten Impedanz Z_{KOMP,S} zwischen dem Stator 3 und dem statorseitigen Lageraußenring 4s.

Ferner kann die Kompensationsanordnung 20 über eine elektrische Verbindung 20i zwischen dem rotorseitigen Lageraußenring 4r und dem statorseitigen Lageraußenring 4s verfügen, wie diese in der Figur 2 gezeigt wird.

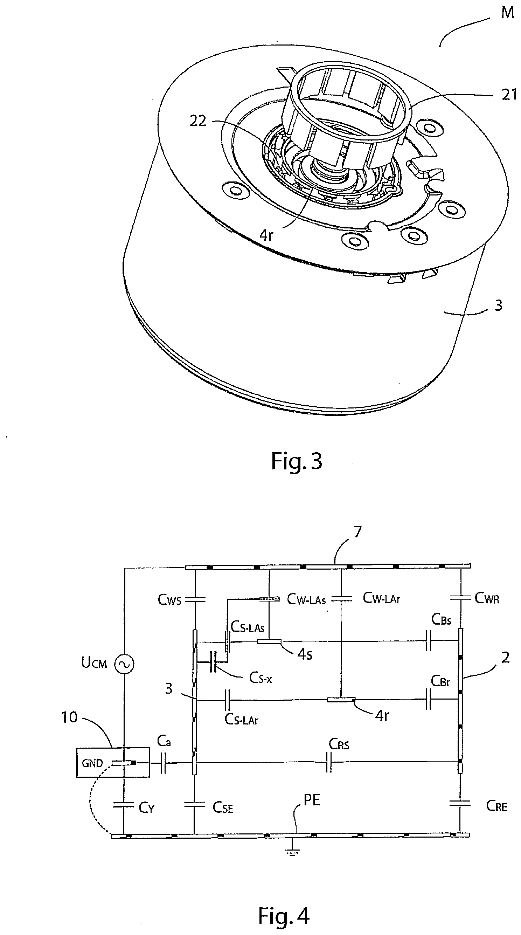

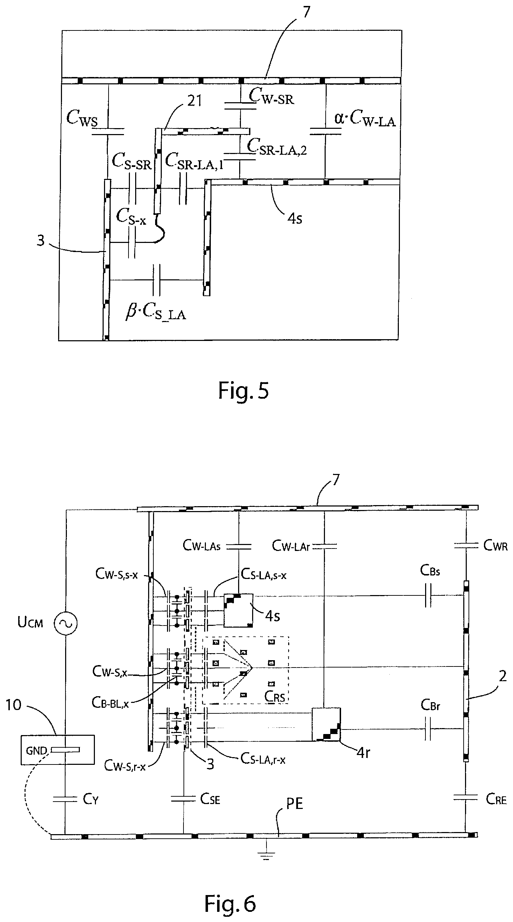

Mit Hilfe der Figuren 3 bis 5 wird ein Ausführungsbeispiel der Erfindung mit einer Lagerschirmung 21 erläutert, wobei die Figur 4 ein Ersatzschaltbild des Kapazitätsnetzwerkes mit einem näheren Detail des Ersatzschaltbilds in der Figur 5 zeigt. Diese Kompensationsanordnung 20 des Motors M dient der Veränderung der Lagerspannung mittels einer Lagerschirmung 21, die zwischen die Motorwicklung 7 und dem rotorseitigen und/oder statorseitigen Lageraußenring 4r, 4s und dem Stator 3 eingebracht ist. Der Stator 3 ist vorliegend als vergossener Stator ausgeführt. Die Lagerschirmung 21 wird als Schirmring in eine Lagertasche 22 um den Lageraußenring 4r eingesteckt.

Die Funktionsweise dieser Kompensationsanordnung 20 wird anhand eines Schirmrings 21 am statorseitigen Lager 4r, 4i mit Bezug auf die Ersatzschaltbilder der Figuren 4 und 5 näher erläutert. Der Schirmring 21 wird in das elektrische Feld, zwischen der Wicklung 7 und dem Lageraußenring 4s eingebracht und über eine Kapazität Cₛ₋ₓ mit dem Stator 3 verbunden. Je nach Überlappungsfläche des eingesteckten Schirmrings 21 bleibt eine Restkapazität αC_{W-LA} von der Wicklung 7 zum Lageraußenring 4s der ursprünglichen Kapazität C_{W-LAs} (ohne den Schirmring 21) erhalten. Der Rest der Kapazität teilt sich auf in die Kapazität C_{W-SR} und die Kapazität C_{W-LAs}. Die gleiche Wirkung entsteht zwischen dem Stator 3 und dem Lageraußenring 4s. Hier teilt sich die ohne Schirmring 21 vorhandene Kapazität C_{S-LA,s} in zwei Kapazitäten C_{S-SR} und C_{SR-LA,1} über dem Schirmring 21 auf.

Wird durch den Schirmring 21 das Potential das Lageraußenrings 4s mit dem des Rotors 2 abgeglichen, so wird die Lagerspannung verringert. Soll das Potential der Lagerspannung jedoch weiter angepasst werden (weil die Wirkung mit dem Schirmring 21 alleine nicht ausreichend ist), so kann durch Einbau einer zusätzlichen Kapazität C_{S-X} die Potentialdifferenz des Schirmrings 21 gegenüber dem Potential des Stators 3 weiter angepasst werden. Wird C_{S-X} gegenüber der Wicklung 7 geschaltet, so findet eine Verringerung der Potentialdifferenz gegenüber der Wicklung 7 statt. Die Kapazität C_{S-X} muss dabei nicht als diskretes Element, wie in der Figur 4 gezeigt, ausgeführt sein, sondern kann alternativ auch über eine parasitäre Kapazität durch den mechanischen Aufbau oder Auswahl des Dieelektrikums angepasst werden.

Ein Schirmring 21 kann ebenso für das rotorseitige Lager 4r eingebracht werden. Der elektrische Wirkmechanismus ist derselbe. Da jedoch eine Anpassung des Potentials des Lageraußenrings 4r auch eine Veränderung des Rotorpotentials und umgekehrt mit sich bringt ist die Abstimmung bei Verwendung zweier Schirmringe 21 getrennt voneinander vorzunehmen.

Es ist des Weiteren möglich die beiden Lageraußenringe 4r, 4s elektrisch über eine Verbindungsleitung miteinander zu verbinden, so dass die Kompensation mit einem Schirmring 21 durchgeführt werden kann. Der Schirmring 21 kann dabei direkt in den Motor M eingelassen bzw. umspritzt werden. Eine weitere Möglichkeit besteht darin diese als Verbindungsclip auszuführen und in den Hohlräumen des Lagersitzes (z. B. den Lagertaschen 22) zu positionieren.

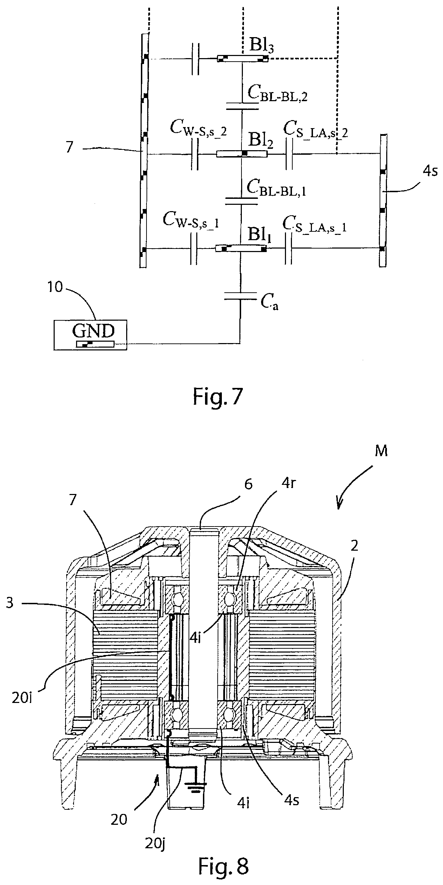

Mit Bezug auf die Figuren 6 und 7 wird ein weiteres Ausführungsbeispiel mit Hilfe von Ersatzschaltbildern erläutert. Die Kompensationsanordnung 20 wird hier mittels zueinander isolierter Statorbleche 3i realisiert. Die Isolation zwischen den Statorblechen 3i nutzt man gezielt, um die Lagerspannung zu reduzieren. Das Lagerspannungsersatzschaltbild der Figur 7 zeigt den Einfluss durch die Isolation zwischen den Statorblechen 3i dahingehend, dass die Kapazität C_{S-LA} nicht als einzelne Kapazität, sondern aus einer Vielzahl von Kapazitäten gebildet wird. In der Figur 7 werden daher die Kapazitäten wie folgt dargestellt. C_{W-S,s-x} repräsentiert die einzelnen Kapazitäten der Wicklung 7 zum Stator 3 bei denen das x-te betroffene Statorblech 3i ebenfalls eine hohe Kopplung zum statorseitigen Lageraußenring 4s aufweist. C_{W-S,r-x} repräsentiert die einzelnen Kapazitäten der Wicklung 7 zum Stator 3 bei denen das jeweilige Statorblech 3i ebenfalls eine hohe Kopplung zum rotorseitigen Lageraußenring 4r aufweist. C_{W-S,x} repräsentiert die einzelnen Kapazitäten der Wicklung 7 zum jeweiligen Statorblech 3i, bei denen das Statorblech 3i keine oder nur eine vernachlässigbare Kopplung mit den Lageraußenringen 4s, 4r aufweist. C_{BL-BL,x} bezeichnet die Kapazität zwischen zwei Blechen 3i und C_{RS} setzt sich aus einer Vielzahl von Kapazitäten, welche eine Kopplung der Statorbleche 3i zum Rotor 2 aufweisen.

Die Kapazitäten C_{S-LA,s-x} und C_{S-LA,r-x} zwischen dem Stator 3 und dem statorseitigen Lageraußenring 4s bzw. dem rotorseitigen Lageraußenring 4r repräsentieren die Koppelkapazität des x-ten Statorblechs 3i zum entsprechenden Lageraußenring.

Liegt nun eine Gleichtaktspannung U_{CM} an der Wicklung 7 an, so entsteht an jedem der Statorbleche 3i aufgrund der kapazitiven Kopplung zur Wicklung 7 oder über die einzelnen Staorbleche 3i hinweg ein Potential gegenüber Erde (PE). Es erfolgt eine Massenanbindung einzelner Bleche 3i über eine Kapazität, wodurch sich ein Spannungsteiler aus einer Vielzahl an Kapazitäten, wie in der Figur 7 dargestellt, ergibt.

Die Figur 8 zeigt eine Darstellung eines weiteren Ausführungsbeispiels der Erfindung. Bei Anwendungen, in denen der Rotor 2 in leitfähigen, geerdeten oder gemassten Medien betrieben wird, reduziert sich das Potential des Rotors 2 gegenüber Erde PE. Im Extremfall d. h. bei hoher Leitfähigkeit weist der Rotor 2 das Erdpotential PE identisch auf. Durch den Spannungsteiler der Kapazitäten von der Wicklung 7 zum Lageraußenring 4r, 4s zum Stator 3 ergibt sich eine verbleibendes Potential am Lageraußenring 4r, 4s. Die Spannung über dem Lager steigt dabei durch die Erdung des Rotors 2 an.

In dieser Ausführung wird eine leitfähige Verbindung 20i zwischen den beiden Lageraußenringe 4r, 4s verwendet. Diese Verbindung verläuft im Stator 3, wobei der Raum zwischen der Welle 6 und dem Stator 3 genutzt wird. Zusätzlich zu der Verbindung 20i der beiden Lager wird der statorseitige Lageraußenring 4s mit der Erde PE über die Verbindung 20j verbunden. Somit kann ein Kurzschluss zwischen dem Lagerinnenring 4i, dem Rotor 2 über Erde und die leitfähige Flüssigkeit erreicht werden. Weist das Medium, in dem der Rotor 2 oder dessen Welle 6 rotiert, eine zu geringe Leitfähigkeit auf, so kann mittels einer Elektrode und der Zugabe von Salzen die Leitfähigkeit verbessert werden.

## Patentansprüche

1. Vorrichtung zur Reduzierung von schädlichen Lagerspannungen in einer elektrischen Maschine (M) mit einem Rotor (2) und mit einem Stator (3), wobei zwischen Rotor (2) und Stator (3) ein rotorseitiger und statorseitiger Lageraußenring (4r, 4s) und je ein Lagerinnenring (4i) vorgesehen ist, umfassend eine Anschlusselektronik zum Anschluss des Motors (M), wobei ferner ein Kompensationsanordnung (20) vorgesehen ist, die ausgebildet ist, um das Potential an den Lageraußenringen (4r, 4s) und dem jeweils korrespondierenden Lagerinnenring (4i) auf einen identischen Wert anzugleichen oder sich anzunähernden Wert einzustellen, **dadurch gekennzeichnet, dass** die Kompensationsanordnung (20) eine Impedanz (Z_{KOMP}) umfasst, bestehend aus wenigstens einer ersten Impedanz (Z_{KOMP,R}) zwischen dem Stator (3) und dem rotorseitigen Lageraußenring (4r) und wobei die Impedanz (Z_{KOMP}) wenigstens eine zweite Impedanz (Z_{KOMP,S}) zwischen dem Stator (3) und dem statorseitigen Lageraußenring (4s) aufweist.

2. Vorrichtung gemäß Anspruch 1 , **dadurch gekennzeichnet, dass** die Kompensationsanordnung (20) eine Ankopplung des Stators (3) an das Massebezugspotential (GND) der Anschlusselektronik (10) über eine definierte Kapazität (Cₐ) umfasst.

3. Vorrichtung gemäß Anspruch 1 oder 2, **dadurch gekennzeichnet, dass** eine Einstellung der Lagerspannung über die Kombination der Kapazitäten (Cₐ) und (Zₖₒₘₚ) vorgenommen wird.

4. Vorrichtung gemäß Anspruch 2 oder 3, **dadurch gekennzeichnet, dass** sich durch Voranpassung des Statorpotentials mittels der Kapazität (Cₐ) auf ein Potential unter oder oberhalb des Potentials des Lagerinnenrings die Sensitivität des Potentials am Lageraußenring bzgl. Toleranzen des Spannungsteilers bestehend aus den Kapazitäten (Cₐ) und (Zₖₒₘₚ) reduziert.

5. Vorrichtung nach Anspruch 3, **dadurch gekennzeichnet, dass** wenigstens eine der beiden Impedanzen (Z_{KOMP,R}, _{ZKOMP,S}) im Lagersitz oder einem Hohlraum in einer elektrischen Verbindungsanordnung (5) zwischen dem Stator (3) und dem Lageraußenring (4r, 4s) angeordnet ist.

6. Vorrichtung gemäß einem der vorhergehenden Ansprüche, **dadurch gekennzeichnet, dass** die Kompensationsanordnung (20) zur Veränderung der Lagerspannung wenigstens eine Lagerschirmung (21) zwischen die Motorwicklung und dem rotorseitigen und/oder statorseitigen Lageraußenring (4r, 4s) und dem Stator (3) vorsieht.

7. Vorrichtung gemäß Anspruch 6, **dadurch gekennzeichnet, dass** die Lagerschirmung (21) als Schirmring in eine Lagertasche um den Lageraußenring (4r, 4s) eingesteckt oder montiert oder festgelegt ist.

8. Vorrichtung gemäß Anspruch 6 oder 7, **dadurch gekennzeichnet, dass** für den rotorseitigen Lageraußenring (4r) eine erste Lagerschirmung (21 ) vorgesehen ist und für den statorseitigen Lageraußenring (4s) eine zweite Lagerschirmung (21 ) vorgesehen ist, wobei sich die eingestellten Potentiale an den Lageraußenringen gegenüber Erdpotential (PE) unterscheiden.

9. Vorrichtung gemäß einem der Ansprüche 1 oder 2, **dadurch gekennzeichnet, dass** die Ankopplung des Stators (3) an das Massebezugspotential (GND) über wenigstens eine Anzahl an Statorblechen (3i) des Stators (3) erfolgt, die gegenüber den weiteren Statorblechen (3i) des Stators (3) isoliert sind, um das Potential des Lageraußenrings (4r, 4s) an das Potential des Rotors (2) anzugleichen.

10. Vorrichtung gemäß Anspruch 9 , **dadurch gekennzeichnet, dass** wenigstens eine Teilmenge der an das Massebezugspotential (GND) gekoppelten Statorbleche (3i) miteinander über einen die Statorbleche durchdringenden, leitfähigen Stift elektrisch verbunden ist.

11. Vorrichtung gemäß einem der Ansprüche 1 bis 8, **dadurch gekennzeichnet, dass** der Rotor (2) mittels einer leitfähigen Flüssigkeit mit dem Erdpotential (PE) in elektrischer Verbindung steht und der rotorseitige und statorseitige Lageraußenring (4r, 4s) über eine am Stator (3) entlang oder durch diesen hindurchgeführte elektrische Verbindung miteinander verbunden ist.

12. Vorrichtung gemäß Anspruch 11, **dadurch gekennzeichnet, dass** der statorseitige Lageraußenring (4r) ferner mit dem Erdpotential (PE) verbunden sind.

13. Elektromotor (M), ausgebildet mit einer Vorrichtung (1) gemäß einem der vorhergehenden Ansprüche 1 bis 12.

14. Verfahren zum Anpassen einer Vorrichtung gemäß einem der Ansprüche 1 bis 13 an eine zumindest die Lagerspannung beeinflussende Applikationsbedingung, indem das Potential des Rotors (2) gegenüber dem Massebezugspotential (GND) verringert wird, dadurch, dass das Potential am Lageraußenring (4r, 4s) abhängig vom Potential des Rotor (2) auf einen jeweils entsprechend niedrigeren Wert eingestellt wird.

## Claims

1. An apparatus for reducing dangerous bearing voltages in an electric machine (M) with a rotor (2) and a stator (3), wherein a rotor-side and a stator-side bearing outer ring (4r, 4s) and a respective bearing inner ring (4i) are provided between the rotor (2) and the stator (3), comprising a connection electronics system for connection of the motor (M), further wherein a compensation arrangement (20) is provided, which is formed to adjust the potential of the bearing outer rings (4r, 4s) and the respective corresponding bearing inner ring (4i) to an identical value or set it to an approximating value, **characterized in that** the compensation arrangement (20) comprises an impedance (Z_{KOMP}) consisting of at least a first impedance (Z_{KOMP, R}) between the stator (3) and the rotor-side bearing outer ring (4r), and wherein the impedance (Z_{KOMP}) has at least a second impedance (Z_{KOMP,} s) between the stator (3) and the stator-side bearing outer ring (4s).

2. The apparatus according to claim 1, **characterized in that** the compensation arrangement (20) comprises a coupling of the stator (3) to the ground reference potential (GND) of the connection electronics system (10) through a defined capacity (Cₐ).

3. The apparatus according to claim 1 or 2, **characterized in that** a setting of the bearing voltage is carried out through the combination of the capacities (Cₐ) and (Z_{KOMP}).

4. The apparatus according to claim 2 or 3, **characterized in that** the sensitivity of the potential at the bearing outer ring regarding tolerances of the voltage divider consisting of the capacities (Cₐ) and (Z_{KOMP}) is reduced through a pre-adaptation of the stator potential by means of the capacity (Cₐ) to a potential below or above the potential of the bearing inner ring.

5. The apparatus according to claim 3, **characterized in that** at least one of the two impedances (Z_{KOMP,s} , Z_{KOMP, s)} is arranged in the bearing seat or a cavity in an electrical connection arrangement (5) between the stator (3) and the bearing outer ring (4r, 4s).

6. The apparatus according to any preceding claim, **characterized in that** the compensation arrangement (20) for changing the bearing voltage provides at least one bearing shield (21) between the motor winding and the rotor-side and/or the stator-side bearing outer ring (4r, 4s) and the stator (3).

7. The apparatus according to claim 6, **characterized in that** the bearing shield (21) is inserted or mounted or fixed into a bearing pocket around the bearing outer ring (4r, 4s) as a shielding ring.

8. The apparatus according to claim 6 or 7, **characterized in that** a first bearing shield (21) is provided for the rotor-side bearing outer ring (4r) and a second bearing shield (21) is provided for the stator-side bearing outer ring (4s), wherein the set potentials at the bearing outer rings are different with respect to earth potential (PE).

9. The apparatus according to claim 1 or 2, **characterized in that** the coupling of the stator (3) to the ground reference potential (GND) occurs via at least a number of stator laminations (3i) of the stator (3), which are insulated against the other stator laminations (3i) of the stator (3) to adjust the potential of the bearing outer ring (4r, 4s) to the potential of the rotor (2).

10. The apparatus according to claim 9, **characterized in that** at least a subset of the stator laminations (3i) coupled to the ground reference potential (GND) are electrically joined to each other through a conductive pin penetrating the stator laminations.

11. The apparatus according to any of the claims 1 to 8, **characterized in that** the rotor (2) is in electrical communication with the earth potential (PE) by means of a conductive liquid, and the rotor-side and stator-side bearing outer rings (4r, 4s) are joined to each other through an electrical connection guided along or through the stator (3).

12. The apparatus according to claim 11, **characterized in that** the stator-side bearing outer ring (4r) is further connected to the earth potential (PE).

13. An electric motor (M) formed with an apparatus (1) according to any of the preceding claims 1 to 12.

14. A method for adapting an apparatus according to any of the claims 1 to 13 to an application condition influencing at least the bearing voltage by decreasing the potential of the rotor (2) with respect to the ground reference potential (GND) by means of the potential at the bearing outer ring (4r, 4s) being set to a respective corresponding lower value depending on the potential of the rotor (2).

## Revendications

1. Dispositif de réduction des tensions de palier préjudiciables d'une machine électrique (M) comprenant un rotor (2) et un stator (3), dans lequel des bague de palier extérieures côté rotor et côté stator (4r, 4s) et une bague de palier intérieure (4i) sont disposées entre le rotor (2) et le stator (3), comprenant une électronique de connexion pour le raccordement du moteur (M), et comprenant en outre un dispositif de compensation (20) configuré pour égaliser ou approximer le potentiel au niveau des bagues de palier extérieures (4r, 4s) et de la bague de palier intérieure correspondante (4i), **caractérisé en ce que** le dispositif de compensation (20) comprend une impédance (Z_{KOMP}) constituée d'au moins une première impédance (Z_{KOMP,R}) entre le stator (3) et la bague de palier extérieure côté rotor (4r), et dans lequel l'impédance (Z_{KOMP}) comprend au moins une seconde impédance (Z_{KOMP,S}) entre le stator (3) et la bague de palier extérieure côté stator (4s).

2. Dispositif selon la revendication 1, **caractérisé en ce que** le dispositif de compensation (20) comprend le couplage du stator (3) au potentiel de référence de masse (GND) de l'électronique de connexion (10) via une capacité définie (Cₐ).

3. Dispositif selon la revendication 1 ou 2, **caractérisé en ce que** la tension du palier est ajustée par la combinaison des capacités (Cₐ) et (Z_{KOMP}).

4. Dispositif selon la revendication 2 ou 3, **caractérisé en ce que**, par préréglage du potentiel du stator au moyen de la capacité (Cₐ) à un potentiel inférieur ou supérieur au potentiel de la bague de palier intérieure, la sensibilité du potentiel de la bague de palier extérieure par rapport aux tolérances du diviseur de tension constitué des capacités (Cₐ) et (Z_{KOMP}) est réduite.

5. Dispositif selon la revendication 3, **caractérisé en ce qu'**au moins une des deux impédances (Z_{KOMP,R}, Z_{KOMP,S}) est disposée dans le siège de palier ou dans une cavité d'un dispositif de connexion électrique (5) entre le stator (3) et les bagues de palier extérieures (4r, 4s).

6. Dispositif selon l'une des revendications précédentes, **caractérisé en ce que** le dispositif de compensation (20) pour modifier la contrainte du palier fournit au moins un écran de palier (21) entre l'enroulement du moteur et les bagues de palier extérieures côté rotor et/ou côté stator (4r, 4s) et le stator (3).

7. Dispositif selon la revendication 6, **caractérisé en ce que** l'écran de palier (21) est inséré, monté ou fixé comme un anneau de protection dans une poche de palier autour des bagues de palier extérieures (4r, 4s).

8. Dispositif selon la revendication 6 ou 7, **caractérisé en ce qu'**un premier écran de palier (21) est prévu pour la bague de palier extérieure côté rotor (4r) et un deuxième écran de palier (21) est prévu pour la bague de palier extérieure côté stator (4s), dans lequel les potentiels définis au niveau des bagues de palier extérieures diffèrent du potentiel de masse (PE).

9. Dispositif selon l'une des revendications 1 ou 2, **caractérisé en ce que** le couplage du stator (3) au potentiel de référence de masse (GND) est effectué via au moins un certain nombre de tôles de stator (3i) du stator (3) qui sont isolées des autres tôles de stator (3i) du stator (3) afin d'égaliser le potentiel des bagues de palier extérieures (4r, 4s) au potentiel du rotor (2).

10. Dispositif selon la revendication 9, **caractérisé en ce qu'**au moins un sous-ensemble des tôles du stator (3i) couplées au potentiel de référence de masse (GND) sont électriquement connectées entre elles via une broche conductrice pénétrant les tôles du stator.

11. Dispositif selon l'une quelconque des revendications 1 à 8, **caractérisé en ce que** le rotor (2) est en contact électrique avec le potentiel de masse (PE) au moyen d'un liquide conducteur et que les bagues de palier extérieures côté rotor et côté stator (4r, 4s) sont reliées entre elles par une connexion électrique le long ou à travers le stator (3).

12. Dispositif selon la revendication 11, **caractérisé en ce que** la bague de palier extérieure côté stator (4r) est en outre reliée au potentiel de masse (PE).

13. Moteur électrique (M) équipé d'un dispositif (1) selon l'une quelconque des revendications précédentes 1 à 12.

14. Procédé d'adaptation d'un dispositif selon l'une quelconque des revendications 1 à 13 à une condition d'application qui influence au moins la contrainte du palier, en réduisant le potentiel du rotor (2) par rapport au potentiel de référence de masse (GND) en ajustant le potentiel de la bague de palier extérieure (4r, 4s) à une valeur inférieure correspondante en fonction du potentiel du rotor (2).
